# EUROPEAN PATENT APPLICATION

(11) **EP 4 691 217 A1**
(43) Date of publication of application: **11.02.2026**
(21) Application number: 24779761.6
(22) Date of filing: 19.03.2024
(51) Int. Cl.: A01B 63/10

(54) **WORK VEHICLE**

(30) Priority: 30.03.2023 JP 2023055102
(71) Applicant: Kubota Corporation, Osaka 556-8601 (JP)
(72) Inventor: SAKAI, Tatsuya, Sakai-shi, Osaka 590-0908 (JP); NAKANO, Shota, Sakai-shi, Osaka 590-0908 (JP); ISHIDA, Yodai, Sakai-shi, Osaka 590-0908 (JP); GONO, Tsuyoshi, Sakai-shi, Osaka 590-0908 (JP); EZAKI, Hideaki, Sakai-shi, Osaka 590-0908 (JP); MASUDA, Ryo, Sakai-shi, Osaka 590-0908 (JP); KIYAMA, Kazuya, Sakai-shi, Osaka 590-0908 (JP); NAGAI, Hiroaki, Sakai-shi, Osaka 590-0908 (JP)
(74) Representative: Cabinet Beau de Loménie
(86) International application number: PCT/JP2024/010797
(87) International publication number: WO 2024/203636

(57) **Abstract**

The work vehicle includes: a vehicle body; a travel device; a transmission T; a shift operation section 13 configured to set a travel speed of the vehicle body; a lift device configured to support the work device and to raise and lower it; a lift operation section 16 operable to an ascent position Lu according to which the work device is raised to a set height, and to a descent position Ld according to which the work device at the set height is lowered to a work height; and a control unit 50 configured to control operations of the transmission T and the lift device. The control unit 50 performs deceleration control on the transmission T in such a manner as to raise the work device to the set height and reduce the travel speed of the vehicle body in response to the lift operation section 16 being operated to the ascent position Lu while the vehicle body travels forward.

## Description

### Technical field

The present invention relates to a work vehicle that includes a work device capable of being raised and lowered at a rear end of a vehicle body.

### Background Art

Taking a tractor as an example, Patent Document 1 describes a tractor that raises and lowers a rotary cultivator in response to a forced lift lever being moved.

The tractor described in Patent Document 1 includes the forced lift lever movable between a forced ascent position and a forced descent position. In this tractor, control is performed so as to raise the rotary cultivator to a set height with priority over automatic tilling depth control in response to the forced lift lever being moved to the forced ascent position while the rotary cultivator is subjected to the automatic tilling depth control.

Patent Document 1 states that, thereafter, control is performed so as to lower the rotary cultivator and shift to automatic update control in response to the forced lift lever being moved to the forced descent position.

### Prior Art Documents

### Patent Documents

Patent Document 1: JP2011-125308A

### Disclosure of the Invention

### Problem to be Solved by the Invention

As described in Patent Document 1, during plowing work, the forced lift lever is moved to the forced ascent position to raise the rotary cultivator to the set height. Work involving turning the vehicle body is performed with the thus-raised rotary cultivator.

To lower the rotary cultivator after turning the vehicle body by 180 degrees, the rotary cultivator is lowered to an optimal work restart position based on an area that has already been plowed, and the vehicle body travels in an area parallel to the area that has already been plowed.

An accurate steering operation is required to turn the vehicle body, position the rotary cultivator above the work restart position, and properly set the traveling direction of the vehicle body as described above. Reduced travel speed may be desired during turning in order to enable the accurate steering operation.

For example, an accurate steering operation is also required before lowering the rotary cultivator in the case of performing so-called circular plowing, where the vehicle body travels in an area along a furrow in a rectangular field, and the vehicle body is turned by 90 degrees to change the direction each time it reaches an end of the furrow.

Also, to turn the vehicle body with the work device such as the rotary cultivator raised, a reduced travel speed is desired for the accurate steering operation. However, if, for example, speed reduction involves moving a shift lever, it will interrupt the steering operation and require an operation to return the travel speed after deceleration. This may complicate the work.

For the above reasons, there is demand for a work vehicle that enables an accurate steering operation to turn the vehicle body with the work device raised.

### Means for Solving Problem

A characteristic configuration of a work vehicle according to the present invention lies in including: a vehicle body; a travel device configured to cause the vehicle body to travel; a transmission configured to output a driving force to the travel device; a shift operation section configured to set a travel speed of the vehicle body output by the transmission; a lift device located at a rear end of the vehicle body and configured to support a work device and to raise and lower the work device; a lift operation section operable to an ascent position according to which the work device is raised to a set height, and to a descent position according to which the work device at the set height is lowered to a work height; and a control unit configured to control operations of the transmission and the lift device, the control unit being configured to perform deceleration control on the transmission in such a manner as to raise the work device to the set height and reduce the travel speed of the vehicle body in response to the lift operation section being operated to raise the work device to the ascent position while the vehicle body travels forward.

According to the present configuration, the control unit controls the lift device to raise the work device to the set height and performs the deceleration control on the transmission to reduce the travel speed of the vehicle body, in response to the lift operation section being moved to the ascent position while the vehicle body travels forward. Thereafter, the control unit lowers the work device to the work height in response to the lift operation section being moved to the descent position.

With this configuration, for example, the work is performed while causing the vehicle body to travel forward with the work device, such as a rotary cultivator, set at the work height, and when turning the vehicle body near a furrow, the work device is raised to the set height by moving the lift operation section to the ascent position. The travel speed of the vehicle body is reduced without moving the shift operation section. Reducing the travel speed in this manner eliminates the need to perform a necessary amount of steering operation in a short time. Even if inaccurate steering operation is performed, it can be corrected. Further, the work device can also be returned to the work height to restart work by moving the lift operation section to the descent position after the vehicle body finishes turning. Thus, the work vehicle is configured that enables accurate steering operation to turn the vehicle body with the work device raised.

As another configuration, the work vehicle may further include a mode selector configured to select between a deceleration mode in which the deceleration control is enabled and a normal mode in which the deceleration control is not performed.

According to this, in the case where the vehicle body turns with the work device raised to the set height, and the travel direction of the vehicle body needs to be properly set after the turning, backward travel in a decelerated state is achieved by selecting the deceleration mode with the mode selector. Meanwhile, in the case where, for example, the travel direction is simply switched as in the case of switch turning, the normal mode is selected to enable quick direction change.

As another configuration, the control unit may maintain the travel speed reduced under the deceleration control, in response to the normal mode being selected by the mode selector during execution of the deceleration control.

According to this, the travel speed reduced under the deceleration control is maintained if the normal mode is selected with the travel speed of the vehicle body reduced under the deceleration control. An increase in the travel speed is thus suppressed, thereby enabling accurate steering operation.

As another configuration, the control unit may execute the deceleration control in response to the deceleration mode being selected by the mode selector while the work device is at the ascent position according to an operation performed on the lift operation section with the normal mode selected by the mode selector.

According to this, if the deceleration mode is selected while the vehicle body travels in the normal mode, the travel speed is reduced to enable accurate steering operation when turning the vehicle body. The travel speed can also be reduced if, for example, the operator moves the lift operation section to the ascent position in order to turn the vehicle body, thereafter determines that the travel speed needs to be reduced and selects the deceleration mode.

As another configuration, the transmission may be constituted by a continuously variable transmission including: a variable displacement hydraulic pump to which a driving force is transmitted from an internal combustion engine of the vehicle body; a hydraulic motor configured to be driven to rotate by a hydraulic fluid discharged from the hydraulic pump, and configured to output a driving force to the travel device; and a swash plate configured to adjust a pressure of the hydraulic fluid discharged from the hydraulic pump.

According to this, the pressure of the hydraulic fluid discharged from the hydraulic pump is adjusted by controlling the swash plate. The hydraulic fluid enables the rotation speed of the hydraulic motor to be continuously varied, allowing the travel speed to be smoothly increased and reduced.

As another configuration, the transmission may further include: an electric actuator configured to set an angle of the swash plate; and a swash plate angle sensor configured to obtain the angle of the swash plate, and the control unit may store the angle of the swash plate obtained by the swash plate angle sensor immediately before executing the deceleration control in association with the lift operation section being operated to the ascent position.

According to this, the angle of the swash plate obtained by the swash plate angle sensor is stored in response to the work device being raised to the set height by moving the lift operation section to the ascent position, and the travel speed being reduced under the deceleration control in association therewith. Storing the angle in this manner makes it possible to restore the travel speed to the original proper speed by referencing the stored angle of the swash plate, even in a case where the work device is lowered to the work height and the travel speed is restored to the original speed.

### Brief Description of the Drawings

FIG. 1 is a side view of a tractor performing plowing work.
FIG. 2 is a plan view of the tractor.
FIG. 3 is a side view of a continuously variable transmission and a control case in an open state.
FIG. 4 is a cross-sectional view of the control case.
FIG. 5 is a plan view of a switching lever, a forced lift lever, and a steering wheel.
FIG. 6 is a block circuit diagram showing a control configuration.
FIG. 7 is a flowchart of shift control.

### Best Mode for Carrying out the Invention

An embodiment of the present invention is described below with reference to the drawings.

### [Basic configuration]

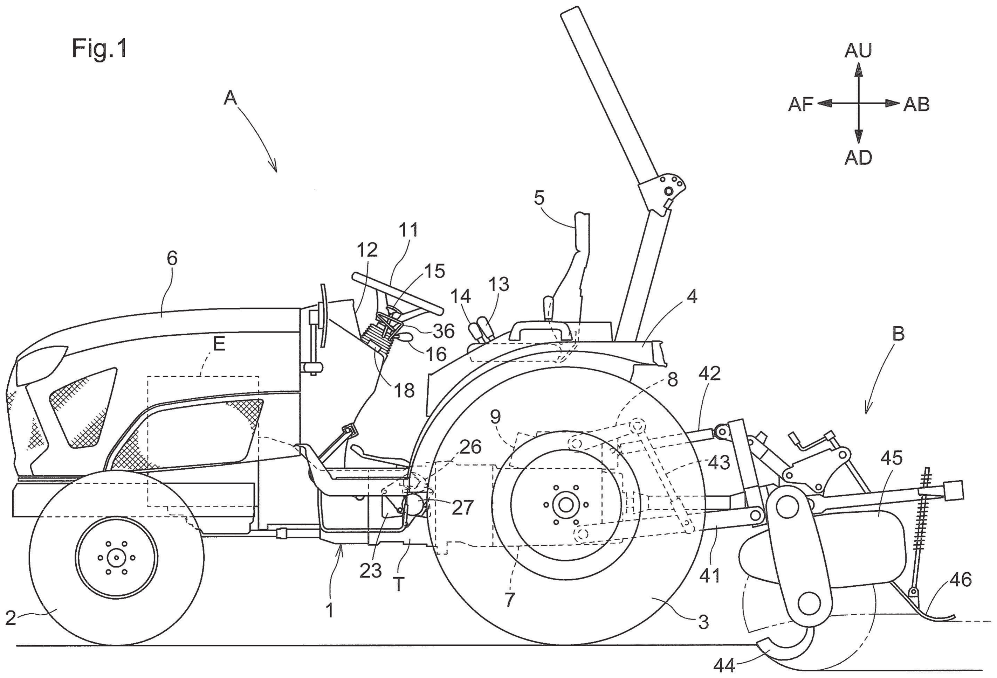

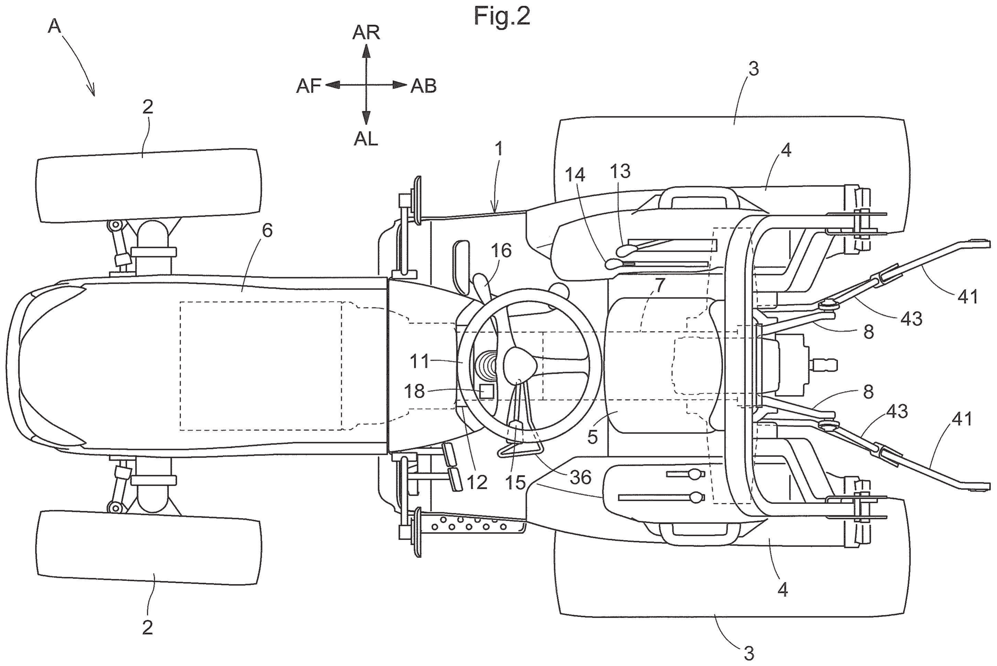

As shown in FIGS. 1 and 2, a tractor A (an example of a work vehicle) has front wheels 2 (each of which is an example of a travel device) on the left and right front sides of its vehicle body 1, rear wheels 3 (each of which is an example of a travel device) on the left and right rear sides of the vehicle body 1, and an operator seat 5 located between left and right rear wheel fenders 4 at the rear of the vehicle body 1.

In the figures, the forward direction of the vehicle body 1 of the tractor A is denoted as AF, the rearward direction as AB, the upward direction as AU, and the downward direction as AD. Also, the leftward direction of the vehicle body 1 is denoted as AL, and the rightward direction as AR in the figures.

The tractor A houses an engine E (an example of an internal combustion engine) inside a hood 6 at the front of the vehicle body 1. A transmission case 7, which is joined to the rear end of the engine E, contains a hydrostatic continuously variable transmission T (an example of a transmission). A configuration of the continuously variable transmission T will be described later.

The tractor A has left and right lift arms 8 (each of which is an example of a lift device) in upper positions of the rear end of the transmission case 7. Each of the left and right lift arms 8 has a base end pivotably supported by the transmission case 7 via a shaft body extending laterally (i.e., in the AR-AL direction). The tractor A has a lift cylinder 9 for driving the left and right lift arms 8 to move up and down at the rear of the transmission case 7.

The tractor A has a steering wheel 11 and a meter panel 12 that are arranged in front of the operator seat 5.

As shown in FIG. 2, the tractor A has a main shift lever 13 (an example of a shift operation section) for setting a travel speed, and a lift lever 14 for performing control to raise and lower a rotary cultivator B shown in FIG. 1, on the right side (in the AR direction) of the operator seat 5.

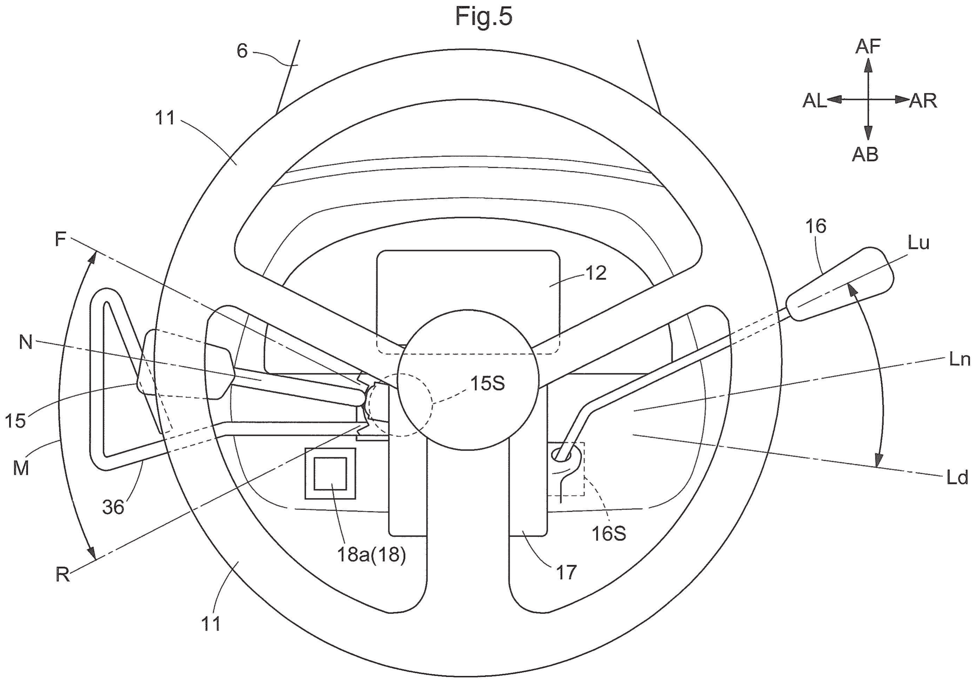

As shown in FIG. 5, the tractor A has a switching lever 15 (an example of a switching operation section) for switching the travel direction of the vehicle body 1 between the forward and backward direction on the left side (i.e., in the AL direction) of the steering wheel 11. The tractor A also has a forced lift lever 16 (lift operation section) for raising and lowering the lift arms 8 on the right side (i.e., in the AR direction) of the steering wheel 11.

As shown in FIGS. 1 and 2, the tractor A has a momentary mode switch 18 (mode selector) near the meter panel 12.

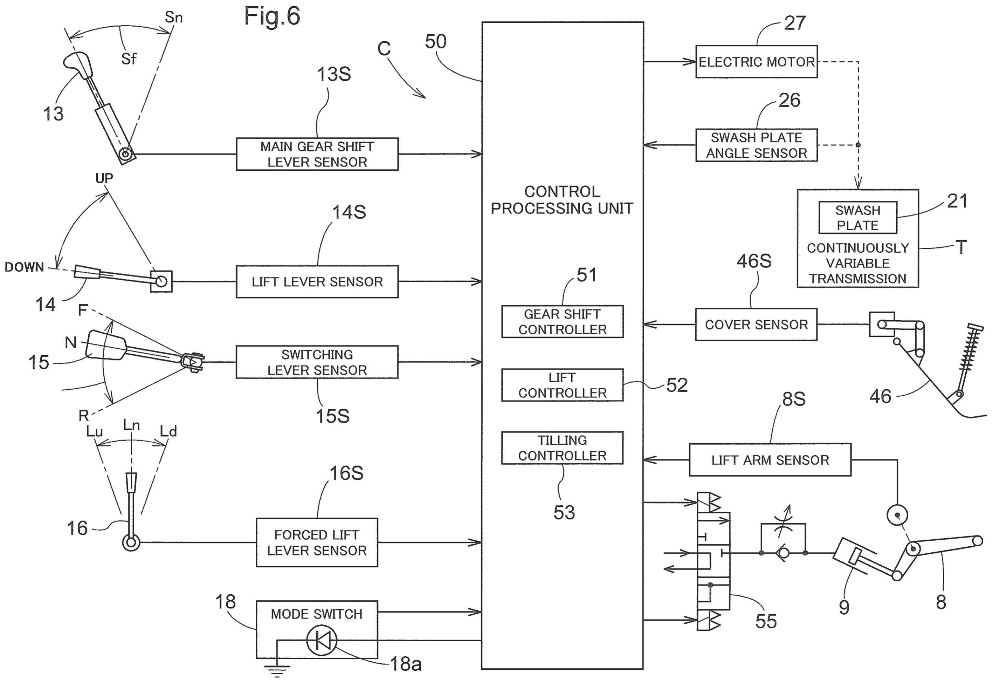

The mode switch 18 incorporates a lamp 18a constituted by a light emitting diode, as shown in FIG. 6. A control processing unit 50 (an example of a control unit) shown in FIG. 6 selects a deceleration mode (ON) by performing a pressing operation to turn on the lamp 18a, and cancels the deceleration mode by performing a pressing operation again to select a normal mode (OFF) and turn off the lamp 18a. The deceleration mode will be described later.

### [Continuously variable transmission]

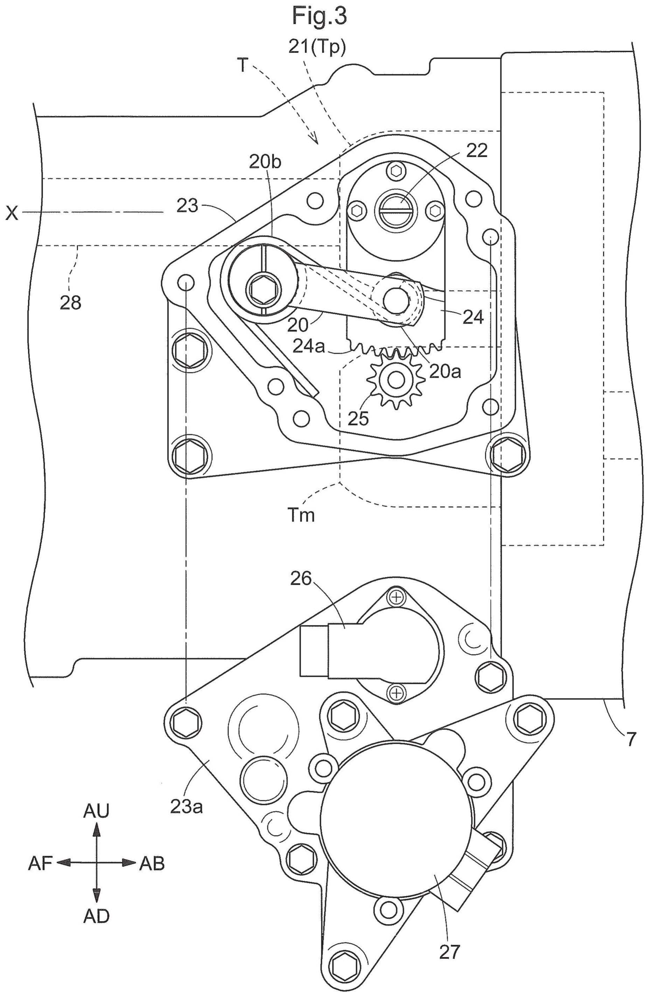

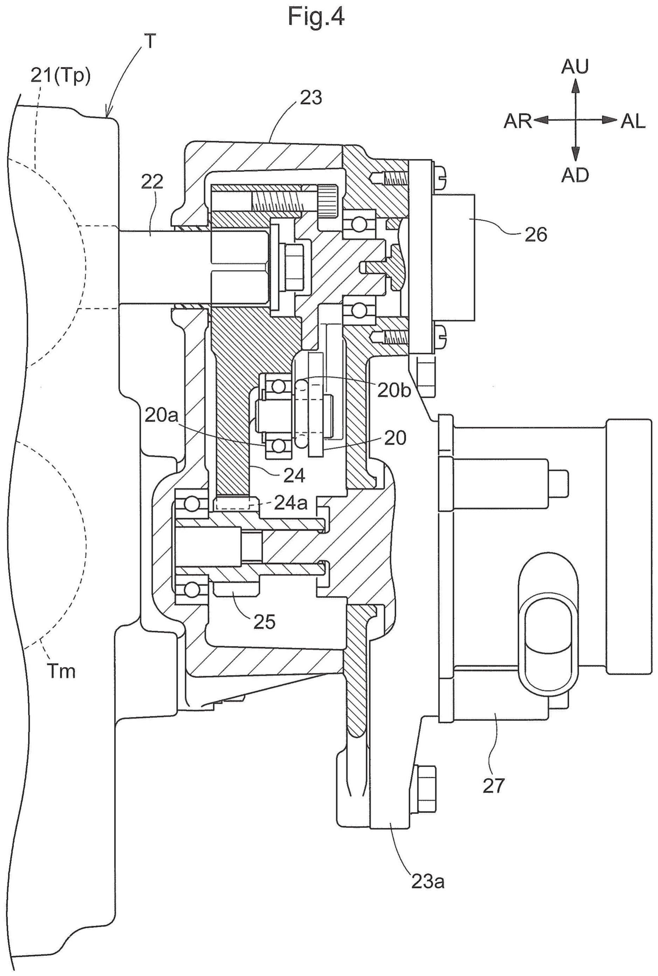

As shown in FIGS. 3 and 4, the continuously variable transmission T includes a variable displacement hydraulic pump Tp and a hydraulic motor Tm to which hydraulic fluid is supplied from the hydraulic pump Tp. The hydraulic pump Tp has a plurality of plungers (not shown) rotated by driving force from an engine E transmitted via an input shaft 28, and adjusts the flow direction and discharge pressure of the hydraulic fluid discharged by the plurality of plungers, by setting the angle of a swash plate 21 (which may also be referred to as a swash plate angle).

While the swash plate angle in the hydraulic pump Tp is at a value (neutral) perpendicular to an axis X of the input shaft 28 as viewed from the direction shown in FIG. 3, the plungers do not reciprocate even while being rotated by the driving force from the engine E, and hydraulic fluid is not discharged. Note that the swash plate 21 has a ring shape with a space in its center for the input shaft 28 to be inserted therethrough.

The hydraulic pump Tp discharges the hydraulic fluid in such a direction as to cause the vehicle body 1 to travel forward in response to the swash plate angle tilting in one direction relative to the axis X, and increases the amount of hydraulic fluid discharged as the swash plate angle increases. Conversely, the hydraulic pump Tp discharges the hydraulic fluid in such a direction as to cause the vehicle body 1 to travel backward in response to the swash plate 21 tilting in the other direction relative to the axis X, and increases the amount of hydraulic fluid discharged as the swash plate angle increases in the other direction.

The hydraulic motor Tm has a plurality of plungers (not shown) that are reciprocated by the hydraulic fluid supplied from the hydraulic pump Tp. The hydraulic motor Tm is rotated by the reciprocation of the plungers in response to the hydraulic fluid being supplied, and transmits the rotational driving force to an output shaft (not shown). Meanwhile, the hydraulic motor Tm rotates in the reverse direction in response to the hydraulic fluid being supplied in the reverse direction, and stops while the hydraulic fluid is not supplied.

The swash plate 21 is joined to a trunnion shaft 22 that changes the swash plate angle. As shown in FIG. 4, one end of the trunnion shaft 22 extends through a side wall of the transmission case 7. A control case 23 is provided on the outer surface of the transmission case 7, and houses a control arm 24 joined to the trunnion shaft 22, a pinion gear 25 meshing with a toothed section 24a at a pivot end of the control arm 24, and a neutral return arm 20.

As shown in FIGS. 3 and 4, the control case 23 has, on its outer wall 23a, a potentiometer-type swash plate angle sensor 26 for detecting the swash plate angle from the amount of rotation of the trunnion shaft 22, and an electric motor 27 (an example of an electric actuator) for driving the pinion gear 25 to rotate.

Further, the neutral return arm 20 is pivotably supported by the control case 23, and has a roller 20a at its pivot end. The neutral return arm 20 is subjected to an urging force of a torsion spring 20b. The control arm 24 has a cam surface having a V-groove shape in contact with the roller 20a.

With the above configuration, the roller 20a of the neutral return arm 20 comes into contact with the cam surface of the control arm 24 in response to the swash plate angle of the swash plate 21 approaching a neutral point. The roller 20a thus moves the control arm 24 into the orientation shown in FIG. 3, and holds the swash plate angle in a neutral position. As a result, the vehicle body 1 stops traveling.

### [Configuration of levers]

As shown in FIG. 6, the main shift lever 13 is pivotable between a stop position Sn at the rear end of an operation area along the front-rear direction (AF-AB direction) and a forward area Sf forward of the stop position Sn.
The set position of the main shift lever 13 is detected by a potentiometer-type main shift lever sensor 13S, which is provided at a base end of the lever.

The lift lever 14 is supported so as to be pivotable along the front-rear direction (AF-AB direction). The set position of the lift lever 14 is detected by a potentiometer-type lift lever sensor 14S at a base end of the lever.

The tractor A performs position control to pivot the lift arms 8 in correspondence with the set position of the lift lever 14 by setting the lift lever 14 in a predetermined position control area.
Note that the pivot orientation of the lift arms 8 is detected by a potentiometer-type lift arm sensor 8S.

As shown in FIG. 1, the tractor A sets the height of the rotary cultivator B by pivoting the lift arms 8. Automatic tilling control of the rotary cultivator B is achieved by setting the lift lever 14 in an area lower than the position control area.

The switching lever 15 overlaps the steering wheel 11 in a plan view. The switching lever 15 extends outward to the left and is supported so as to be movable along a linear operation path M, which extends along the front-rear direction of the vehicle body 1, as shown in FIGS. 5 and 6.

The switching lever 15 has its operation end supported within a handle column, and the set position of the switching lever 15 is detected by a potentiometer-type switching lever sensor 15S (an example of a sensor), which is provided at a base end of the switching lever 15.

The switching lever 15 can be set to a neutral position N that is an intermediate position on the operation path M, a forward position F forward of the neutral position N, and a reverse position R rearward of the neutral position N.

A protector 36 made of a rod material is located below the switching lever 15. The protector 36 has its base end fixed on the vehicle body side and prevents the switching lever 15 being moved erroneously due to contact of a knee or foot when the operator sits in the operator seat 5.

The tractor A can be switched between forward and backward travel by moving the switching lever 15.
Further, control is performed so as to raise the rotary cultivator B to the set height in response to the switching lever 15 being set to the reverse position R while plowing work is performed under automatic tilling depth control of the rotary cultivator B. Thereafter, the rotary cultivator B is lowered by moving the forced lift lever 16 to the descent position Ld with the vehicle body 1 in a forward traveling state, thereby enabling the restart of the plowing work under the automatic tilling depth control.

### [Configuration of levers: forced lift lever]

The forced lift lever 16 (lift operation section) overlaps the steering wheel 11 in a plan view. The forced lift lever 16 extends rightward from a steering wheel post 17 and is supported movably in the up-down direction.

As shown in FIGS. 5 and 6, the forced lift lever 16 is held in a neutral lift position Ln while not moved. Further, the forced lift lever 16 is supported movably between an ascent position Lu above the neutral lift position Ln and a descent position Ld below the neutral lift position Ln.

The forced lift lever 16 has, at its base end, the lift lever sensor 14S for detecting to which of the neutral lift position Ln, the ascent position Lu, and the descent position Ld the forced lift lever 16 has been moved.

The tractor A raises the rotary cultivator B to the set height in response to the forced lift lever 16 being moved to the ascent position Lu with the rotary cultivator B lowered under the automatic tilling depth control as shown in FIG. 1.

The tractor A lowers the rotary cultivator B to the work height at which the automatic tilling depth control is performed on the rotary cultivator B, by moving the forced lift lever 16 to the descent position Ld with the rotary cultivator B raised to the set height. Further, when the tractor A raises the rotary cultivator B to the set height, a clutch of the transmission system is disengaged in conjunction with the rise of the rotary cultivator B to disconnect the driving force transmitted from the vehicle body 1 to the rotary cultivator B, regardless of which of the lift lever 14, the forced lift lever 16, or the switching lever 15 is moved.

The above lift control of the rotary cultivator B is achieved by a control device C shown in FIG. 6 controlling the lift cylinder 9.

### [Rotary cultivator]

As shown in FIGS. 1 and 2, the rotary cultivator B is joined to the rear end of the vehicle body 1 of the tractor A via a three-point linkage mechanism. The three-point linkage mechanism has left and right lower links 41 at rear end positions, and a single top link 42 at a position above the lower links 41.

The left and right lower links 41 are supported by lift rods 43 in a suspended manner relative to the left and right lift arms 8. With this, the lift cylinder 9 is extended and retracted to raise and lower the left and right lift arms 8, thereby enabling the rotary cultivator B to be raised and lowered via the three-point linkage mechanism. The lift mechanism is thus constituted by the lift cylinder 9 and the three-point linkage mechanism that raises and lowers the rotary cultivator B.

The rotary cultivator B has a plurality of plow blades 44 that are rotated together with a lateral drive shaft by the driving force transmitted from the transmission case 7, and also has an upper cover 45 and a rear cover 46 covering the plow blades 44.

The rear cover 46 is pivotably supported about a lateral axis relative to the rear end of the upper cover 45. The rotary cultivator B has a cover sensor 46S for detecting a pivot orientation of the rear cover 46 on an upper surface of the upper cover 45.

In the automatic tilling depth control performed with the rotary cultivator B, the control device C controls the lift cylinder 9 by feeding back a detection signal of the cover sensor 46S so as to maintain the pivot orientation of the rear cover 46 at a target orientation.

### [Control device]

As shown in FIG. 6, the control device C includes a control processing unit 50 such as a microprocessor or a digital signal processor (DSP).

The control processing unit 50 includes a shift controller 51, a lift controller 52, and a tilling controller 53, which are constituted by software. Note that the shift controller 51, the lift controller 52, and the tilling controller 53 are not limited to being constituted by software, but may alternatively be partially constituted by hardware such as a logic circuit.

The control processing unit 50 receives signals from the main shift lever sensor 13S, the lift lever sensor 14S, the switching lever sensor 15S, the forced lift lever sensor 16S, the lift arm sensor 8S, the cover sensor 46S, and the mode switch 18.

The control processing unit 50 outputs a control signal to the electric motor 27 for shifting the transmission ratio of the continuously variable transmission T, and receives a detection signal from the swash plate angle sensor 26.

The control processing unit 50 outputs a control signal to a lift control valve 55 for supplying and discharging hydraulic fluid to and from the lift cylinder 9.

The shift controller 51 sets a control mode so as to reduce the travel speed in response to the rotary cultivator B under the automatic tilling depth control being raised to the ascent position by the forced lift lever 16 and the mode switch 18 being in the ON state (i.e., the deceleration mode being selected). Hereinafter, the travel in a decelerated state may be referred to as decelerated travel.

### [Control device: overview of shift control]

The shift controller 51 stops the travel of the vehicle body 1 in response to the main shift lever 13 being set to the stop position Sn. Also, in response to the main shift lever 13 being set in the forward area Sf, the shift controller 51 causes the vehicle body 1 to travel forward at a speed corresponding to the set position.

The above shift control is achieved by the shift controller 51 changing the transmission ratio of the continuously variable transmission T. Specifically, a target swash plate angle of the swash plate 21 is set based on the detection signal of the main shift lever sensor 13S. The electric motor 27 is controlled in such a direction as to reduce the deviation between the target swash plate angle and the swash plate angle of the signal detected by the swash plate angle sensor 26.

The shift controller 51 performs forward deceleration control to implement decelerated travel in response to the rotary cultivator B being raised to the set height by moving the forced lift lever 16 with the deceleration mode selected (ON state) by the mode switch 18. This forward deceleration control will be described later.

### [Control device: lift control/tilling control]

The lift controller 52 performs operations of raising and lowering the lift arm 8 based on the set position of the lift lever 14 obtained from the detection signal of the lift lever sensor 14S, and the set position of the forced lift lever 16 obtained from the detection signal of the forced lift lever sensor 16S.

In response to the lift lever 14 being set in a predetermined position control area, the lift controller 52 performs position control to raise and lower the rotary cultivator B to a height corresponding to the set position. A target height is set in correspondence with the set position of the lift lever 14 during the position control, and the lift cylinder 9 is controlled by feeding back the detection signal of the lift arm sensor 8S.

Further, the lift controller 52 switches the control mode from the position control to the automatic tilling depth control in response to the rotary cultivator B being lowered to an area lower than the position control area using the lift lever 14.

During the automatic tilling control, an operator sets a target tilling depth in advance using a dial or the like (not shown), thereby allowing the tilling controller 53 to set a target pivot angle for pivoting the rear cover 46. The rotary cultivator B performs tilling with the target pivot angle set in this manner, and the lift cylinder 9 is controlled to raise and lower the rotary cultivator B in such a direction as to reduce the deviation between the pivot angle of the rear cover 46 detected by the cover sensor 46S and the target pivot angle.

During the automatic tilling control, the rotary cultivator B is raised to a preset ascent height in response to a setting of the forced lift lever 16 to the ascent position Lu being detected from the detection signal of the forced lift lever sensor 16S.

The rotary cultivator B is lowered and returned to the automatic cultivation control in response to a setting of the forced lift lever 16 to the descent position Ld being detected with the rotary cultivator B in the ascent position.

### [Control device: forward deceleration control]

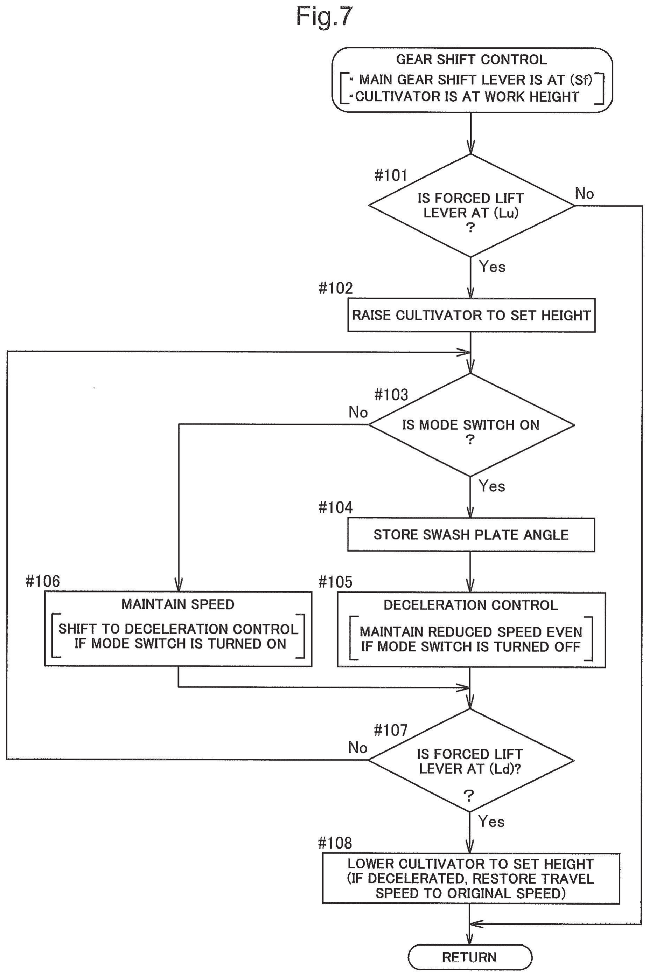

The flowchart shown in FIG. 7 illustrates a control mode that is based on a state where the main shift lever 13 is set in the forward area Sf and the rotary cultivator B is at the work height under the automatic tilling depth control.

During this control, if the control processing unit 50 detects that the forced lift lever 16 has been set to the ascent position Lu (Yes in step #101), the control processing unit 50 raises the rotary cultivator B to the set height with priority over the automatic tilling depth control (steps #101 and #102).

This raising control is achieved by the control processing unit 50 sending a control signal to the lift controller 52. The raising control is performed to pivot the lift arms 8 upward by supplying the hydraulic fluid to the lift cylinder 9 under the control of the lift control valve 55. Thereafter, the control stops in response to the rotary cultivator B being raised to the set height according to the detection signal of the lift arm sensor 8S.

The set height is a height at which the plow blades 44 of the rotary cultivator B are separated from the field surface. The angle of the lift arms 8 corresponding to the set height is stored in the control processing unit 50 (control unit).

The control processing unit 50 determines the state of the mode switch 18 at a point when the forced lift lever 16 is set to the ascent position Lu. If the determination result indicates that the mode switch 18 is in the ON state (i.e., the deceleration mode is selected) (Yes in step #103), the control processing unit 50 stores the swash plate angle in the shift controller 51 based on control information, and then performs the deceleration control (steps #104 and #105)

Note that the lamp 18a is lit while the mode switch 18 is in the ON state, and is off while the mode switch 18 is in the OFF state, as mentioned above.

If the mode switch 18 is in the OFF state (normal mode: the deceleration mode is not selected) at the point when the forced lift lever 16 is set to the ascent position Lu (No in step #103), the control processing unit 50 performs control to maintain the speed (steps #103 and #106).

The deceleration control is performed to set the travel speed to a deceleration value, i.e., a reduced travel speed, through calculation of multiplying by a factor the speed set in the forward area Sf by the main shift lever 13, or by referring to a table based on the set speed. Note that, in the deceleration control, a target swash plate angle is set as the aforementioned deceleration value, and the electric motor 27 is controlled in such a direction as to reduce the deviation between the target swash plate angle and the actual swash plate angle.

In particular, even if the mode switch 18 is turned off to select the normal mode while the deceleration control is executed to cause the vehicle body 1 to travel at reduced speed, the control processing unit 50 does not switch the mode but maintains the decelerated travel while keeping the lamp 18a lit (step #105). On the other hand, if the mode switch 18 is turned on while the vehicle body 1 maintains its speed during travel, the control processing unit 50 switches from the normal mode to the deceleration mode, turns on the lamp 18a, and causes the vehicle body 1 to travel at reduced speed by performing the deceleration control (step #106).

Note that the deceleration control is performed after the swash plate angle is also stored, even immediately before shifting to the deceleration control to reduce the travel speed as in step #106.

Thus, if the forced lift lever 16 is not set to the descent position Ld while the rotary cultivator B is raised to the set height and the vehicle body 1 travels in a decelerated state (No in step #107), the control processing unit 50 continues control leading to step #103.

On the other hand, if the forced lift lever 16 is set to the descent position Ld (Yes in step #107), the control processing unit 50 lowers the rotary cultivator B to the work height.

Also, while the deceleration control is performed, the stored swash plate angle is set as the target swash plate angle in association with the lowering of the rotary cultivator B, and the electric motor 27 is controlled in such a direction as to reduce the deviation from the actual swash plate angle (step #108).

The above control lowers the rotary cultivator B to the work height, thereby returning the rotary cultivator B to the plowing work under the automatic tilling depth control. The vehicle body 1 travels at the original travel speed before the rotary cultivator B was raised by controlling the continuously variable transmission T.

### [Operation and effect of the Embodiment]

If the forced lift lever 16 is set to the ascent position Lu with the mode switch 18 in the ON state, the tractor A raises the rotary cultivator B to the set height with priority over the automatic tilling depth control and reduces the travel speed of the vehicle body 1 in association therewith. As a result, the travel direction can be set with high accuracy by a steering operation with sufficient time margins when turning the vehicle body 1. In addition, the vehicle body 1 travels at a low speed, allowing for correction of the steering operation even after an incorrect steering operation has been performed.

Further, if the forced lift lever 16 is set to the descent position Ld after the vehicle body 1 has been turned, the tractor A lowers the rotary cultivator B to the work height, restarts the plowing work under the automatic tilling depth control, and restores the travel speed to the original speed before deceleration. This control eliminates the need to move the lift lever 14 to raise and lower the rotary cultivator B, as well as the need to move the main shift lever 13 to change the travel speed.

The tractor A controls the continuously variable transmission T in a deceleration direction to shift to decelerated travel. Thus, smooth deceleration is achieved without any impact while changing the transmission ratio, compared to, for example, gear shifts using a clutch. Similarly, smooth acceleration is also achieved when the travel speed is increased from decelerated travel to the original speed before deceleration.

The tractor A travels at a speed that is already set by the main shift lever 13 even if the rotary cultivator B is raised to the set height by the forced lift lever 16 while the mode switch 18 is in the OFF state. This allows for quick direction change when the travel direction is simply changed, as in the case of switch turning.

The tractor A maintains the reduced travel speed even if the mode switch 18 is turned off during the decelerated travel. The reduced travel speed is thus maintained, thereby avoiding an increase of the travel speed even if the mode switch 18 is erroneously turned off.

On the other hand, if the tractor A raises the rotary cultivator B to the set height according to the forced lift lever 16 with the mode switch 18 in the OFF state, the rotary cultivator B does not shift to the decelerated travel in association with the raising of the rotary cultivator B. In this situation, the tractor A can shift to the decelerated travel by turning on the mode switch 18. This allows for steering operations with sufficient time margins when turning the vehicle body 1.

This control mode allows deceleration if the operator determines that the travel speed needs to be reduced, for example, even after the operator has moved the forced lift lever 16 to the ascent position Lu while keeping the mode switch 18 in the OFF state due to not performing an operation thereon (i.e., without turning on the mode switch 18) even in a situation where the vehicle body 1 needs to turn in a decelerated state.

### [Other Embodiments]

The present invention may be configured as follows in addition to the above-described embodiment (components having the same functions as those in the embodiment are given reference numerals and signs common to the embodiment).
(a) The mode switch 18 is provided at an outer end portion of the forced lift lever 16. Providing the mode switch 18 in this manner allows the deceleration mode to be selected easily.
(b) The mode switch 18 is provided on the upper surface of the rear wheel fender 4 or near the steering wheel 11, rather than being provided near the meter panel 12.
   Even if the mode switch 18 is arranged as in the other embodiments (a) and (b), providing the lamp 18a inside the switch allows the deceleration mode to be easily recognized.
(c) The mode switch 18 may be configured as a toggle switch, and is not limited to a configuration having a mechanical contact. For example, the mode switch 18 can also be configured as an icon displayed on a touchscreen.
(d) The lift operation section is constituted by a switch that is operable to switch between an ascent position and a descent position. This lift operation section can be envisioned as, for example, a switch having a rockertype knob that swings like a seesaw. The switch for the ascent position turns on in response to the knob being turned to the ascent position, and the switch for the descent position turns on in response to the knob being turned to the descent position.
(e) The speed set under the deceleration control is a fixed value. In the embodiment, the speed is set that is reduced through processing such as calculation that is based on the speed set in the forward area Sf by the main shift lever 13. By alternatively setting a fixed value, the travel speed reduced when turning the vehicle body 1 can be set to a predetermined value, allowing the steering operation to be performed with the same sense.
(f) A belt CVT is used as the continuously variable transmission T. Using the belt CVT also allows the travel speed to be varied continuously.
(g) The control mode of the control processing unit 50 is set such that the speed during the decelerated travel can be set to any value. Use of a manually operable dial or manually setting the speed using a touchscreen is conceivable in order to set the speed during the decelerated travel to a certain value.
(h) The work vehicle is not limited to the tractor A, and may also be a riding-type rice transplanter, a riding-type lawn mower, or the like.
(i) In the description of step #106 in the above embodiment, the control processing unit 50 switches from the normal mode to the deceleration mode to turn on the lamp 18a and causes the vehicle body 1 to perform decelerated travel under the deceleration control in response to the mode switch 18 being turned on while the vehicle maintains its speed during travel. However, there is no limitation to this configuration. That is, a configuration may be employed in which the speed is not reduced even if the mode switch 18 is turned on after the forced lift lever 16 is subjected to a raising operation.

Note that the configurations disclosed in the above embodiments (including other embodiments, the same applies below) can be applied in combination with configurations disclosed in other embodiments, as long as no contradictions arise. Furthermore, the embodiments disclosed herein are examples. The embodiments of the present invention are not limited to these, and can be modified as appropriate without departing from the purpose of the present invention.

### Industrial Applicability

The present invention can be used in a work vehicle having a work device capable of being raised and lowered at the rear end of a vehicle body.

### Description of Reference Signs

1: Vehicle body
2, 3: Travel device
8: Lift arm (lift device)
13: Main shift lever (shift operation section)
16: Forced lift lever (lift operation section)
18: Mode switch (mode selector)
21: Swash plate
26: Swash plate angle sensor
27: Electric motor (electric actuator)
50: Control processing unit (control unit)
B: Rotary cultivator (work device)
E: Engine (internal combustion engine)
T: Continuously variable transmission, transmission
Tp: Hydraulic pump
Tm: Hydraulic motor
Lu: Ascent position
Ld: Descent position

## Claims

1. A work vehicle comprising:
a vehicle body;
a travel device configured to cause the vehicle body to travel;
a transmission configured to output a driving force to the travel device;
a shift operation section configured to set a travel speed of the vehicle body output by the transmission;
a lift device located at a rear end of the vehicle body and configured to support a work device and to raise and lower the work device;
a lift operation section operable to an ascent position according to which the work device is raised to a set height, and to a descent position according to which the work device at the set height is lowered to a work height; and
a control unit configured to control operations of the transmission and the lift device,
the control unit being configured to perform deceleration control on the transmission in such a manner as to raise the work device to the set height and reduce the travel speed of the vehicle body in response to the lift operation section being operated to raise the work device to the ascent position while the vehicle body travels forward.

2. The work vehicle according to claim 1, further comprising:
a mode selector configured to select between a deceleration mode in which the deceleration control is enabled and a normal mode in which the deceleration control is not performed.

3. The work vehicle according to claim 2,
wherein the control unit maintains the travel speed reduced under the deceleration control, in response to the normal mode being selected by the mode selector during execution of the deceleration control.

4. The work vehicle according to claim 2,
wherein the control unit executes the deceleration control in response to the deceleration mode being selected by the mode selector while the work device is at the ascent position according to an operation performed on the lift operation section with the normal mode selected by the mode selector.

5. The work vehicle according to any one of claims 1 to 4,
wherein the transmission is constituted by a continuously variable transmission including: a variable displacement hydraulic pump to which a driving force is transmitted from an internal combustion engine of the vehicle body; a hydraulic motor configured to be driven to rotate by a hydraulic fluid discharged from the hydraulic pump, and configured to output a driving force to the travel device; and a swash plate configured to adjust a pressure of the hydraulic fluid discharged from the hydraulic pump.

6. The work vehicle according to claim 5,
wherein the transmission further includes: an electric actuator configured to set an angle of the swash plate; and a swash plate angle sensor configured to obtain the angle of the swash plate, and
the control unit stores the angle of the swash plate obtained by the swash plate angle sensor immediately before executing the deceleration control in association with the lift operation section being operated to the ascent position.
